# DEMANDE DE BREVET EUROPEEN

(11) **EP 0 840 250 A1**
(43) Date de publication de la demande: **06.05.1998**
(21) Numéro de dépôt: 97402556.1
(22) Date de dépôt: 28.10.1997
(51) Int. Cl.: G06K 9/00

(54) **Système de lecture d'empreintes digitales avec résistances de chauffage intégrées**

(30) Priorité: 05.11.1996 FR 9613453
(71) Demandeur: THOMSON-CSF, 75008 Paris (FR)
(72) Inventeur: Leger, François THOMSON-CSF, 94117 Arcueil Cedex (FR)
(74) Mandataire: Guérin, Michel

(57) **Abrégé**

L'invention propose un système de lecture d'empreintes digitales, comportant un capteur (10,20), sur lequel est appuyé un doigt (11,62) dont on veut lire l'empreinte digitale (12,63), ayant une surface active d'éléments sensibles (41,42,43) aux variations de température et des résistances de chauffage intégrées créant une variation transitoire de la température des éléments sensibles, le capteur fournissant des images stables de l'empreinte digitale qui peut être immobile. Le système peut comporter des moyens de visualisation et de traitement des images de l'empreinte digitale.

Application notamment dans les dispositifs d'authentification de personnes.

## Description

L'invention concerne les systèmes de lecture d'empreintes digitales, utilisés notamment dans des dispositifs d'authentification de personnes.

Les nombreux systèmes d'authentification des personnes basés sur l'analyse des empreintes digitales, comportent au moins un capteur permettant d'obtenir une image de l'empreinte digitale de la personne à identifier. Dans les systèmes actuels, le doigt est posé sur le capteur dont la surface de lecture doit être nécessairement de l'ordre de grandeur du doigt. Le capteur est associé à un système d'analyse permettant de comparer l'image de l'empreinte digitale qu'il fournit, à une image d'une empreinte digitale de référence stockée sur un médium adéquat, par exemple une carte à puce.

Dans la plupart des cas, les capteurs fournissent une information de type analogique et le système d'analyse fait appel à un traitement numérique de l'image de l'empreinte digitale qui doit être numérisée en sortie du capteur à l'aide d'un convertisseur analogique numérique. Dans certaines réalisations, le capteur délivre directement l'image numérisée.

Les systèmes de lecture des empreintes digitales sont souvent basés sur l'utilisation de dispositifs optiques comme par exemple une caméra vidéo captant l'image du doigt, mais une simple photographie du même doigt permet d'obtenir la même image en sortie de la caméra et ainsi de frauder le système. Pour pallier cet inconvénient, certains systèmes utilisent des prismes ou des microprismes afin de s'assurer que c'est bien un véritable doigt et non une photographie qui se trouve placé devant le capteur, la réflexion de la lumière ne s'effectuant qu'aux endroits où les sillons de l'empreinte ne touchent pas le prisme, une photographie est alors inopérante. Néanmoins les systèmes optiques ne permettent pas de déterminer si le doigt qui est placé devant le capteur est bien vivant et n'est donc pas un doigt par exemple moulé. Les systèmes optiques présentent d'autres inconvénients comme par exemple leur volume important et un coût de production élevé.

D'autres moyens ont été proposés pour réaliser des dispositifs d'authentification de personnes par les empreintes digitales, exploitant les possibilités de traitement collectif de l'industrie du semi-conducteur, donc potentiellement moins coûteux et offrant les avantages de l'intégration du capteur et de tout ou partie de la chaîne de traitement des données du dispositif d'authentification notamment la numérisation de l'image en sortie du capteur, le stockage de l'image de référence et l'authentification. Le capteur de lecture des empreintes digitales comporte une matrice d'éléments sensibles, fournissant un signal électrique différent selon qu'une crête du sillon de l'empreinte digitale touche ou ne touche pas un élément sensible du capteur.

Des brevets ont été déposés sur différents moyens de lecture des empreintes digitales :
- le brevet US,4,353,056, décrit un principe de lecture basé sur la variation de la capacité des éléments sensibles du capteur.

D'autres systèmes comportent des capteurs ayant des composés sensibles à la pression, à la température, ou bien à la pression et à la température, transformant l'information spatiale de pression et/ou de température en un signal électrique qui est ensuite collecté par un multiplexeur à semi-conducteurs, qui peut être par exemple une matrice de transfert de charges, connue sous la dénomination anglaise de "CCD"; le brevet US,4,394,773, décrit un tel principe.

Les capteurs basés sur les effets piézo et/ou pyroélectrique sont les plus intéressants car ils sont sensibles à la pression et/ou à la chaleur exercée sur ses éléments sensibles, ce qui permet de déterminer, lors de la lecture de l'empreinte digitale, si le doigt est bien vivant par la chaleur propre qu'il dégage. Il est aussi possible de détecter les variations dues à la pulsation du sang dans le doigt, induisant une variation de chaleur et/ou de pression, ce qui permet d'obtenir une plus grande fiabilité dans l'authentification de l'empreinte digitale.

Le signal électrique fourni par les capteurs intégrés sur un substrat semi-conducteur présente l'inconvénient d'être fugitif et un système spécifique est nécessaire pour le maintenir dans le temps car les charges électriques sont induites par des variations des effets physiques (température, pression...) sur le capteur et en conséquence le signal à sa sortie tend à disparaître à la mise en équilibre des effets physiques. Les constantes de temps de disparition du signal sont de l'ordre de quelques millisecondes à quelques secondes dans les cas favorables.

Le résultat pratique est la production d'une série d'images à partir du moment où le doigt est posé sur le capteur. La qualité de contraste de ces images n'est pas stable et elles ont tendance à s'évanouir ce qui complique la tâche du système de reconnaissance car il doit alors analyser toutes les images produites en permanence par le capteur afin de trouver la plus correcte pour l'authentification.

Des systèmes avec une excitation extérieure au capteur ont été proposés, par exemple envoi d'un faisceau d'énergie sous forme de micro-ondes, mais ils compliquent le système et augmentent son volume et son prix.

On peut pallier la disparition transitoire de l'image de l'empreinte à l'aide d'une mémoire électronique mais ceci complique la conception du capteur et augmente son coût de fabrication car cela requiert une technologie permettant de réaliser cette mémorisation et il est très difficile de construire un système suffisamment précis, fiable et peu coûteux capable de décider quelle est la meilleure image parmi toutes celles produites par le capteur.

La présente invention propose de pallier les inconvénients de l'art antérieur en proposant un système de lecture d'empreintes digitales comportant un capteur ayant une matrice d'éléments sensibles et un multiplexeur permettant de mesurer individuellement des charges électriques engendrées par un phénomène transitoire dans les éléments sensibles de la matrice, la matrice étant encapsulée dans un boîtier ouvert sur une de ses faces pour permettre d'appuyer un doigt sur la matrice, la matrice fournissant des signaux électriques correspondant à un motif matriciel constituant une image globale de l'empreinte digitale, caractérisé en ce que le capteur comporte des moyens pour créer une variation thermique interne transitoire de la matrice d'éléments sensibles, le système comprenant des moyens pour lire les signaux de la matrice après application de cette variation thermique.

Cette variation de température locale du capteur, a pour effet de créer une charge locale dans le matériau pyroélectrique du capteur.

Une empreinte digitale se présente sous la forme d'un ensemble de sillons de la peau, comportant des lignes de bosses et de creux. Lorsque la zone du doigt comportant cette empreinte est appuyée sur la matrice d'éléments sensibles échauffés du capteur, la présence des bosses de l'empreinte digitale en contact avec des éléments sensibles conduit à une meilleure dissipation de la chaleur de ces éléments que la présence des creux de cette même empreinte.

La dissipation de cette chaleur et en conséquence la variation de température de chaque élément sensible est donc plus ou moins importante selon la présence, sur ces éléments sensibles du capteur, des bosses ou des creux de l'empreinte digitale. Ce phénomène crée une modulation spatiale des variations thermiques dans la couche pyroélectrique et en conséquence une modulation spatiale des charges collectées par le multiplexeur. Le doigt étant immobile, et la lecture des charges étant effectuée sequentiellement, se traduit par la production par le système de lecture d'une image stable. L'élévation de température de la couche pyroélectrique reste faible, inférieure à environ un degré Kelvin.

La variation locale transitoire de température des éléments sensibles est réalisée par une résistance chauffante placée au contact de la matrice d'éléments sensibles, parcourue par un courant transitoire de chauffage du capteur fonctionnant en synchronisme avec la lecture des charges par le multiplexeur. Ce courant transitoire fait monter la température localement par dissipation de l'énergie électrique par effet Joule.

Dans une première réalisation, la matrice d'éléments sensibles est organisée en lignes et le capteur comporte alors autant de résistances chauffantes que de lignes d'éléments sensibles. Chaque résistance chauffante, associée à sa ligne respective, est parallèle à cette ligne pour effectuer son chauffage. Le multiplexeur effectue ligne par ligne, la lecture des charges des éléments sensibles, chaque ligne étant successivement lue et remise à zéro une par une. Le courant de chauffage est injecté dans chaque résistance associée à une ligne, par exemple, juste après la lecture de la ligne, ou pendant la remise à zéro des charges électriques des capacités pyroélectriques. L'image de l'empreinte digitale complète est reconstituée par le système.

Dans une autre réalisation une seule résistance chauffante est utilisée pour chauffer l'ensemble des éléments sensibles de la matrice. Cette unique résistance sous la forme d'un serpentin, parcourt toute la surface du capteur en passant entre les éléments sensibles afin effectuer leur chauffage. Après injection du courant dans la résistance, les charges des capacités des éléments sensibles représentent l'image complète de l'empreinte digitale. Cette image est figée par une mémorisation de la charge créée dans chaque élément sensible de la matrice puis l'image est lue séquentiellement pour reconstituer l'image complète de l'empreinte. Le courant peut être injecté dans la résistance, par exemple, pendant la lecture séquentielle de l'image.

On peut envisager aussi que la lecture des éléments sensibles se fasse élément par élément, ce qui nécessite un adressage à la fois en ligne et en colonne et une résistance par élément.

Un autre aspect de cette invention réside dans la possibilité d'effectuer un test automatique du bon fonctionnement de chaque élément sensible de la matrice sans utiliser par exemple des sources de température et/ou de pression externes au système, appliquées au capteur. En effet le chauffage transitoire des éléments sensibles du capteur par la résistance ou les résistances intégrées au capteur, crée des charges fugitives dans les capacités des éléments sensibles qui permettent de vérifier par le contrôle de ces charges, le bon fonctionnement de chaque élément sensible de la matrice.

D'autres caractéristiques de l'invention apparaîtront à la lecture de la description détaillée des réalisations suivantes et qui est faite en référence aux dessins annexés dans lesquels :
- la figure 1 représente une vue générale du capteur d'empreinte,
- la figure 2 représente une coupe schématique montrant la constitution du capteur dans la zone d'un élément sensible,
- la figure 3 montre un exemple de réalisation des résistances chauffantes,
- la figure 4 montre la dissipation thermique des éléments sensibles par l'empreinte digitale,
- la figure 5 représente un synoptique d'un système de lecture d'empreintes digitales selon l'invention.

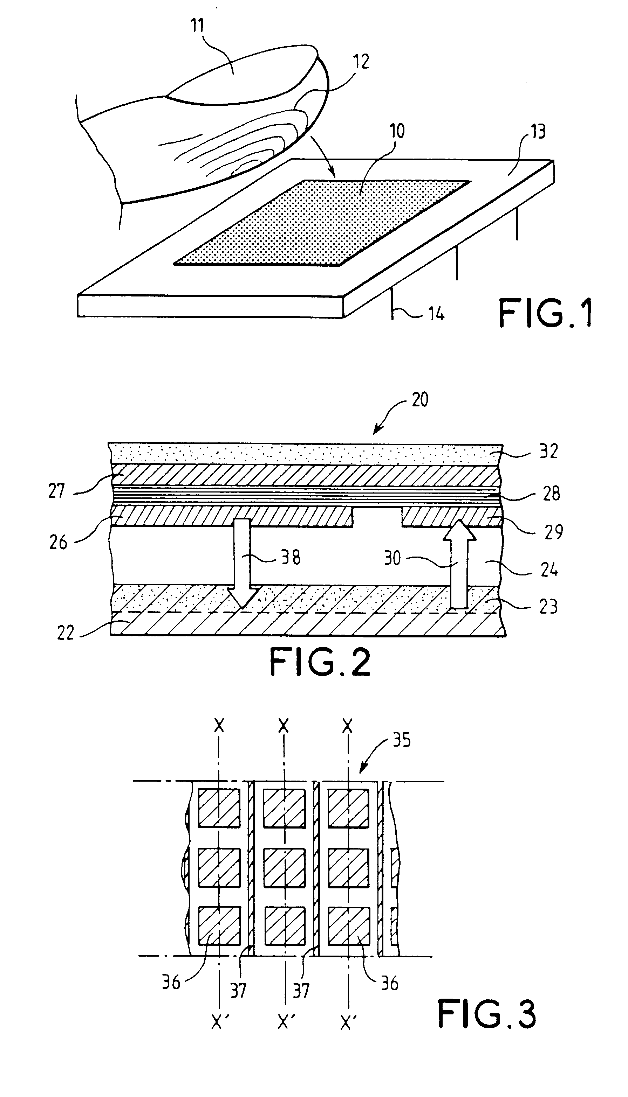

La figure 1, montre une vue générale du capteur d'empreintes digitales comportant des résistances chauffantes. Le capteur d'empreinte 10, est un circuit intégré ayant une forme rectangulaire de taille suffisante pour effectuer la lecture de l'empreinte digitale. Le circuit intégré comporte une matrice d'éléments sensibles réalisés par une couche active pyroélectrique placée entre une électrode supérieure et un réseau matriciel d'électrodes inférieures. Les électrodes inférieures reposent sur un substrat semi-conducteur dans lequel est formé un circuit électronique intégré apte à traiter les charges électriques engendrées par la couche pyroélectrique sur chacune des électrodes du réseau. Le circuit intégré est contenu dans un support 13 relié par des broches de connexion 14 qui transmettent à l'extérieur du capteur des signaux électriques dont l'ensemble représente une image à un moment donné, du motif de température de la couche active pyroélectrique. La constitution des électrodes inférieures en réseau matriciel permet de réaliser un réseau d'éléments sensibles pyroélectriques individuels même si la couche pyroélectrique est continue.

La figure 2 représente schématiquement une partie d'un circuit intégré 20 dans la zone d'un élément sensible du capteur comportant à proximité une résistance chauffante 29.

Le circuit intégré comporte :
- un substrat semi-conducteur 22, qui est en principe un substrat de silicium. Dans ce substrat sont formés des circuits de lecture et de traitement de charges électriques constituant le multiplexeur 23. Ces circuits sont par exemple des circuits CCD (circuits à transfert de charges), ou des circuits C-MOS. Ils sont réalisés selon les technologies courantes de fabrication de circuits intégrés au silicium. Les circuits sont constitués en réseau, en fonction du motif matriciel d'éléments pyroélectriques qui sera formé ultérieurement.
- un isolant thermique 24, déposé sur le substrat
- des capacités pyroélectriques constituées par une armature métallique inférieure 26 et une armature métallique supérieure 27, entre lesquels est située une couche 28 de matériau pyroélectrique. L'armature métallique supérieure 27 est commune à l'ensemble des capacités des éléments sensibles et peut être trouée (réticulée) afin de limiter la propagation latérale de la chaleur. L'armature métallique inférieure 26 est reliée à un accès 38 du multiplexeur 23, effectuant la lecture des charges des capacités. La résistance chauffante 29 est réalisée au même niveau que l'électrode inférieure 26 et se trouve reliée, par un accès 30, à un générateur de courant transitoire, du multiplexeur 23.
- une fine couche de protection 32, déposée sur les éléments sensibles, dont la propagation thermique doit être essentiellement perpendiculaire au plan du capteur, afin de limiter la diffusion latérale de la chaleur.

Le matériau de la couche pyroélectrique peut être par exemple un polyfluorure de vinylidène (PVDF), un polyfluorure de vinylidène-trifluoroéthylène (PVDF-TrFE), un polycyanure de vinylidène-vinylacétate (PVDCN-VAc), un polycyanure de vinylidène-fluorure de vinylidène (PVDCN-VDF). D'autres couches sensibles sont possibles, en particulier toutes celles qui produisent des charges électriques en fonction d'un paramètre pyro-piézoélectrique.

Dans le cas des copolymères précédemment cités, le principal effet utilisé est la génération des charges électriques induites par la variation de température du copolymère.

La figure 3, montre une vue partielle d'un circuit intégré 35 au niveau du plan des armatures inférieures 36 des capacités pyroélectriques et des résistances de chauffage 37, situées sur le même plan du circuit intégré. Les résistances de chauffage 37, parcourent le circuit intégré, entre des lignes, d'axe XX', d'armatures inférieures des capacités pyroélectriques et parallèlement à ces lignes. Les résistances chauffantes 37 sont réalisées par dépôt, par exemple de titane, au même moment que les armatures métalliques inférieures 36 des capacités pyroélectriques.

Dans le cas de lecture ligne par ligne, une résistance est associée à une ligne d'éléments sensibles. Dans le cas de lecture d'une image complète une seule résistance est associée à l'ensemble des éléments sensibles du capteur.

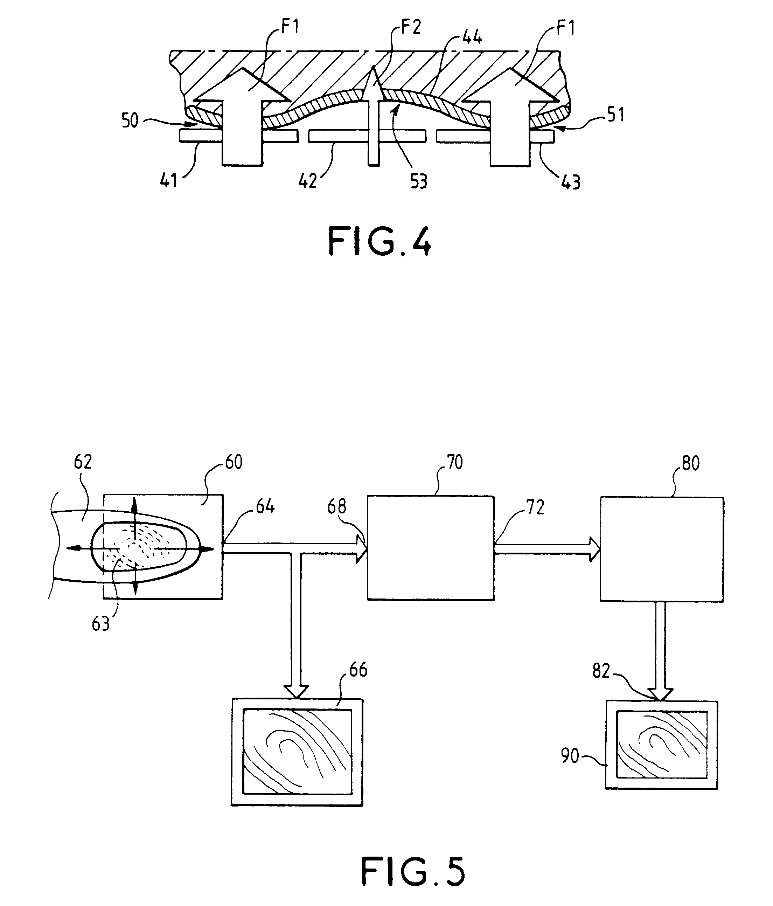

La figure 4, montre schématiquement un ensemble d'éléments sensibles 41,42,43 contigus, sur lesquels est appuyés une partie de l'empreinte digitale 44 dont on a représenté sur la figure 4 la surface agrandie. L'empreinte digitale, comporte à cet endroit deux bosses 50 et 51 et un creux 53. Les bosses 50 et 51 sont respectivement en contact avec les éléments sensibles 41 et 43 alors que le creux 53 n'est pas en contact avec l'élément sensible 42. Lors de l'échauffement transitoire des éléments sensibles, le flux de chaleur F1 dissipé par le doigt appuyé sur le capteur est plus important sur les éléments sensibles 41 et 43 en contact avec les bosses respectives 50 et 51 que le flux de chaleur F2 dissipée par élément sensible 42 qui n'est pas en contact avec le doigt du à la présence du creux 53 de l'empreinte digitale. Cela crée lors de la variation thermique transitoire produite par le passage du courant dans la résistance de chauffage une variation spatiale de température des éléments sensibles et en conséquence une variation spatiale, image de la variation thermique, des charges dans les capacités pyroélectriques.

Nous allons décrire par la suite un exemple de réalisation d'un système de lecture d' empreintes digitales, selon l'invention, comportant des moyens de visualisation et de traitement des images d'empreintes digitales fournies par un capteur avec des résistances chauffantes et ayant une surface de l'ordre de grandeur d'une empreinte digitale dont on veut effectuer la lecture.

Le système comporte un capteur 60, tel qu'il a été décrit précédemment, dont les éléments sensibles sont chauffés transitoirement par une ou plusieurs résistances chauffantes. Sur la surface pyroélectrique du capteur 60, est appuyé un doigt 62 immobile, ayant une empreinte digitale 63. Le capteur 60 fournit à une sortie 64, un signal analogique représentant l'image de l'empreinte digitale 63. La sortie 64 du capteur est connectée d'une part à un terminal vidéofréquences 66 comportant un écran de visualisation des images de l'empreinte et d'autre part à une entrée analogique 68 d'un convertisseur 70 analogique/numérique. Une sortie numérique 72 du convertisseur 70 est connectée à une entrée d'une mémoire numérique 80. La sortie de cette mémoire est connectée à une entrée numérique 82 d'un système de traitement et de calcul, par exemple un micro-ordinateur 90.

Chaque image analogique générée par le capteur 60 est visualisée sur l'écran du terminal vidéofréquence 66, ce qui permet de juger en temps réel de la qualité des images fournies constamment par le capteur 60. Le doigt 62 peut être déplacé légèrement sur la surface pyroélectrique du capteur afin de trouver la meilleure image de l'empreinte digitale 63, la vitesse de déplacement du doigt étant limitée, pour être compatible avec la fréquence des images en sortie du capteur.

Dans cette première phase, l'image de l'empreinte digitale est simplement visualisée sur le terminal vidéofréquences 66, sans effectuer une acquisition de l'image de l'empreinte par le système. Le terminal vidéofréquence 66 comporte un système d'adaptation connu, non représenté sur la figure, permettant de transformer le signal analogique en sortie du capteur en un signal vidéofréquences visualisable par un écran vidéofréquences classique.

Lorsque l'image est considérée comme satisfaisante, l'image est acquise et numérisée sur un nombre N de bits par le convertisseur analogique numérique 70. L'image numérisée fournie par le convertisseur 70 est stockée à une vitesse relativement élevée, de l'ordre de quelques mégahertzs, dans la mémoire numérique 80. Cette mémoire numérique 80 est de taille modeste, correspondant environ au produit du nombre d'éléments sensibles du capteur par le nombre de bits N pour coder le niveau de chaque élément sensible.

L'image numérisée stockée dans la mémoire numérique 80 est en suite transmise au micro-ordinateur 90, à une vitesse plus faible que la vitesse de stockage dans la mémoire, de l'ordre de quelques centaines de kilohertz, compatible avec les vitesses d'entrée admises par les entrées numériques (port parallèle ou port série) du micro-ordinateur 90.

Le système faisant l'objet de cette invention, ne nécessite pas d'algorithme de reconstruction d'images, cependant l'image stockée dans le micro-ordinateur 90, est tout d'abord traitée par des méthodes connues, pour améliorer sa qualité et ensuite pour extraire l'information utile à la reconnaissance de l'empreinte digitale. Un algorithme de recherche permet d'authentifier l'empreinte mémorisée en la comparant avec une image d'empreinte digitale préenregistrée correspondant à un individu à authentifier. Ces algorithmes de reconnaissances de formes peuvent utiliser par exemple des traitements d'extraction de contours, de vectorisation des contours, ou autres types de traitements, l'image utile d'une empreinte digitale est en fait un ensemble de contours correspondant aux crêtes et aux sillons de cette empreinte. Pour l'authentification, on comparera les ensembles des contours détectés à des ensembles de contours préenregistrés correspondant à un individu à authentifier. Les ensembles des contours pourront alors être stockées sous formes de tables de vecteurs décrivant ces contours.

## Revendications

1. Système de lecture d'empreintes digitales comportant un capteur (10,20) ayant une matrice éléments sensibles (41,42,43) et un multiplexeur (23) permettant de mesurer individuellement des charges électriques engendrées par un phénomène transitoire dans les éléments sensibles de la matrice, la matrice étant encapsulée dans un boîtier ouvert (13) sur une de ses faces pour permettre d'appuyer un doigt (11) sur la matrice, la matrice fournissant des signaux électriques correspondant à un motif matriciel constituant une image globale de l'empreinte digitale (12,63), caractérisé en ce que le capteur comporte des moyens pour créer une variation thermique interne transitoire de la matrice d'éléments sensibles, le système comprenant des moyens pour lire les signaux de la matrice après application de cette variation thermique.

2. Système de lecture d'empreinte digitale selon la revendication 1, caractérisé en ce que la variation thermique interne transitoire crée une variation spatiale des charges collectées par le multiplexeur par différence de conduction thermique entre des creux (44) et des bosses (50,51) des sillons de l'empreinte digitale en contact avec la matrice d'éléments sensibles.

3. Système de lecture d'empreinte digitale selon l'une des revendications 1 ou 2, caractérisé en ce que la variation de la température interne transitoire de la matrice d'éléments sensibles du capteur est réalisée par une résistance chauffante (29,37) placée au contact de la matrice d'éléments sensibles, parcourue par un courant transitoire de chauffage du capteur fonctionnant en synchronisme avec la lecture des charges par le multiplexeur.

4. Système de lecture d'empreinte digitale selon la revendication 3, caractérisé en ce que la matrice d'éléments sensibles est organisée en lignes, le capteur comportant autant de résistances chauffantes que des lignes, chaque résistance chauffante étant associée à sa ligne respective et en ce que la lecture des signaux d'une ligne est effectuée après chauffage de la résistance correspondant à cette ligne, le système reconstituant l'image complète de l'empreinte digitale.

5. Système de lecture d'empreinte digitale selon la revendication 3, caractérisé en ce qu'une seule résistance chauffante est prévue pour l'ensemble des éléments sensibles de la matrice.

6. Système de lecture d'empreinte digitale selon la revendication 3, caractérisé en ce qu'une résistance chauffante est prévue pour chacun des éléments sensibles de la matrice.

7. Système de lecture d'empreinte digitale selon l'une des revendications 1 à 6, caractérisé en ce la matrice d'éléments sensibles est constituée par une couche de polymère pyroélectrique et des électrodes de part et d'autre de cette couche.

8. Système de lecture d'empreinte digitale selon l'une des revendications 3 à 6, caractérisé en ce que la résistance chauffante est réalisée au même niveau que les armatures métalliques inférieures des capacités pyroélectriques par dépôt métallique, notamment du titane.

9. Système de lecture d'empreinte digitale selon l'une des revendications 1 à 8, caractérisé en ce qu'il comporte des moyens de visualisation et de traitement des images fournies par le capteur.

10. Système de lecture d'empreinte digitale selon la revendication 1, caractérisé en ce que le système effectue l'authentification d'un individu par comparaison d'une image fournie par le capteur à une image préenregistrées correspondant à un individu à authentifier.

11. Système selon l'une des revendications 1 à 10, caractérisé en ce qu'il comporte des moyens pour effectuer un test automatique du bon fonctionnement de chaque élément sensible de la matrice par chauffage transitoire des éléments sensibles du capteur.
